# EUROPEAN PATENT SPECIFICATION

(11) **EP 0 844 782 B1**
(45) Date of publication and mention of the grant of the patent: **11.04.2007**
(21) Application number: 97120379.9
(22) Date of filing: 20.11.1997
(51) Int. Cl.: H04N 1/32

(54) **Picture image outputting method and photograph finishing system using the method**
Bildausgabeverfahren und dieses benutzendes Fotobehandlungssystem
Procédé de sortie d'image et système de photo-finition utilisant ce procédé

(30) Priority: 20.11.1996 JP 30932296; 20.11.1996 JP 30932396; 18.06.1997 JP 16166097; 18.06.1997 JP 16166197
(43) Date of publication of application: 27.05.1998
(60) Divisional application: 05002724.2
(73) Proprietor: FUJIFILM Corporation, Minato-ku Tokyo (JP)
(72) Inventor: Shiota, Kazuo, c/o Fuji Photo Film Co., Ltd., Tokyo (JP); Ohtsuka, Shuichi, c/o Fuji Photo Film Co., Ltd., Ashigarakami-gun, Kanagawa-ken (JP); Nakajima, Nobuyoshi, c/o Fuji Photo Film Co., Ltd., Ashigarakami-gun, Kanagawa-ken (JP); Haneda, Norihisa, c/o Fuji Photo Film Co., Ltd., Asaka-shi, Saitama-ken (JP); Makishima, Sugio, c/o Fuji Photo Film Co., Ltd., Asaka-shi, Saitama-ken (JP); Tanaka, Hiroshi, c/o Fuji Photo Film Co., Ltd., Asaka-shi, Saitama-ken (JP)
(74) Representative: Klunker . Schmitt-Nilson . Hirsch

(56) References cited:
- EP-A- 0 234 809
- EP-A- 0 774 710
- US-A- 4 947 266
- US-A- 5 377 016
- US-A- 5 461 492
- US-A- 5 574 533
- PATENT ABSTRACTS OF JAPAN vol. 096, no. 008, 30 August 1996 & JP 08 101464 A (SONY CORP), 16 April 1996

## Description

### BACKGROUND OF THE INVENTION

### Field of the Invention

The present invention relates to a a picture image outputting method and apparatus according to the preamble of claim 1 and claim 3, respectively.

### Description of the Related Art.

A photograph finishing system has been known which obtains image data by reading a picture recorded in each frame of a photograph film (hereinafter simply called a film) using a film scanner and outputs the image data as a picture print after necessary image processing has been carried out on the image.

Meanwhile, picture image data have been stored in a removable medium as an image file so that the picture image data can be used by a personal computer or the like. This service has been generally carried out on only picture images selected by a customer. Therefore, it has been normal for equipment such as a scanner or an image processing apparatus to be installed separately from the photograph finishing system such as described above. In this case, for providing such a high quality image file that they can be output not only as an image on a monitor but also as a picture print, costly equipment is necessary as the equipment described above. Therefore, a file outputting service charge has not necessarily been inexpensive.

Recently, digital cameras have become wide spread, because of their advantage that the pictures recorded thereby can be easily input to a personal computer. Following the spread of digital cameras, a printing service to output pictures recorded by a digital camera as picture prints has become popular.

However, such a service has less users than the printing service using a film or a medium. Furthermore, the number of pixels of a digital image obtained by a digital camera or image processing that a digital camera carries out on the digital image varies depending on the type of a digital camera, which, is different from the case where a picture recorded on a film is digitized. Therefore, to print such a digital image, more sophisticated processing must be carried out, which leads to an increase in equipment cost. As a result, in reality, only a portion of service providers have installed an image processing apparatus or a picture printer dedicated to outputting prints of pictures recorded by a digital camera separately from a conventional photograph finishing system.

### SUMMARY OF THE INVENTION

US-A-5,574,533 discloses a laboratory system in which scanned image data are written into a storage medium, e.g. into an IC card. This corresponds to the system described above.

In accordance with the preamble of claim 1 and claim 3, respectively, US-A-5,461,492 discloses a picture image outputting method and system in which the developed photographic film is fed in a forward direction during which feeding operation a first reading is carried out. During this first reading, low resolution image data are obtained (a pre-scan). During a second reading, which is carried out in reverse film feeding direction, a high resolution scan (main-scan) is made. The main-scan data is applied to an external computer to either be printed or written to a photo CD. The pre-scan data are mainly used for detecting the position of the frames provided on the photograph film.

A demand for a file outputting service to a removable medium as described above has also been increasing recently, following a sharp increase in the popularity of personal computers. Furthermore, a service wherein all customers' pictures are stored in a server computer having a large capacity disc and installed in a laboratory or the like (hereinafter called an image server) and used for extra prints of the stored pictures has been proposed. Therefore, a method which can output a picture image data file at a lower cost and more efficiently has been desired.

When considered from the point of view of picture quality, it is not preferable to carry out print output and file output separately. When they are carried out separately, it is not necessarily guaranteed that reading conditions or image processing conditions are the same between the output print and file. Therefore, if a print is generated from a picture image file for example, it may not necessarily have the same finish as a simultaneous produced print, and an inconvenience such as an adjustment by trial and error to achieve the same finish may occur.

In accordance with claim 1 and claim 3, the present invention therefore provides a picture image outputting method and system whereby an image file by which the finish a customer expects is obtained and output efficiently and provided to the customer at a low cost, when a picture image recorded on a film is output as a print and recorded in a recording medium as an image file.

In other words, a plurality of picture image data obtained in one film handling operation are output as prints by a printer while they are output as files in a predetermined recording medium. In this manner, equipment such as a film scanner can be used efficiently, and print generation and file saving are efficiently carried out at a low cost.

In this case, outputting of both a print and a file is carried out in one film handling operation, which means that image processing is carried out based on only one and the same criterion, if necessary. Therefore, when a picture image data having been recorded in a file are output as a print, the expected finish can be obtained without any adjustment by trial and error.

The processing speed of a medium drive such as a floppy disc drive and that of a printer are not necessarily the same. Therefore, in the above system, even when output of both a print and a file is carried out at the same time, it is possible that the medium having the faster processing speed will be put in an idle state. Likewise, the processing speed is not necessarily balanced between a film scanner and the above two kinds of outputting apparatuses. In other words, the processing ability of the entire system depends on the apparatus with the lowest processing speed among the three kinds of apparatuses. Therefore, no matter how high the performance of the apparatuses other than the lowest one is, its ability may be wasted when incorporated in the above system.

In the present invention, to provide a low cost service without such a waste, each apparatus configuring the system can demonstrate its ability fully.

For this purpose, the numbers of film scanners, printers, and file outputting apparatuses are decided so that the processing ability of a single apparatus × the number of apparatus is almost the same for each kind of apparatus.

Furthermore, if the chances for outputting picture images to a medium are increased by the above high efficiency system, it is expected that orders of prints from the medium will also increase in proportion. Especially, image editing and processing software for a personal computer is becoming more reasonable in price and easier to use recently. Therefore, print orders of processed images are also expected to increase.

In other words, the present invention can provide low cost outputting services of a print and a file of images read from a film and furthermore obtained from a medium or a digital camera using one photograph finishing system. In this manner, even a small scale service provider can introduce this system without the problems regarding cost and installation space, and thus service providing locations can expand.

### BRIEF DESCRIPTION OF THE DRAWINGS

Figure 1 is a diagram showing an embodiment of a picture image outputting apparatus according to the present invention,
Figure 2 is a diagram showing another embodiment of a picture image outputting apparatus according to the present invention,
Figure 3 is a diagram showing an example of a film feeding sequence,
Figure 4 is a diagram showing another example of a film feeding sequence,
Figure 5 is a diagram showing still another example of a film feeding sequence,
Figure 6 is a diagram showing an example of file name recording on a print, and
Figure 7 is a diagram showing an embodiment of a photograph finishing system according to the present invention,
Figure 8 is a diagram showing another embodiment of a photograph finishing system according to the present invention,
Figure 9 is a diagram showing a configuration of the system shown in Figure 8,
Figure 10 is a diagram showing still another embodiment of a photograph finishing system according to the present invention, and
Figure 11 is a diagram showing a configuration of the system shown in Figure 10.

### DESCRIPTION OF THE PREFERRED EMBODIMENTS

The picture image outputting method of the present invention is characterized by that a plurality of picture image data are obtained by sequentially reading a plurality of picture images recorded in frames of a developed film using a film scanner having the function of automatic film feeding, and the plurality of picture images are output by a printer in the form of prints and files in a predetermined recording medium. In other words, the present invention outputs the picture image data in the form of both prints and files at one time.

It is preferable that the reading is carried out on only images of desired frames among the plurality of picture frames recorded on the photograph film. The "desired frame" herein referred to means the frames with normal quality, without blur, and without overexposure or underexposure, for example. In the APS (Advanced Photo System) or the like, it is possible for a photographer to decide whether or not a frame should be printed, and records the information on a film magnetically, before the film is read. Some photograph finishing systems therefore have the function of reading this information using a film scanner and automatically skipping unnecessary frames . In other words, in such a case, "the desired frames" mean the frames on which information showing necessity of print output is recorded.

As a concrete example of the above method, several methods can be listed such as the method wherein a first reading is carried out in forward film feeding direction and the image data having been read are all output in the form of prints, and a second reading is carried out in the reverse film feeding direction and the image data having been read at the second reading are then output in the form of files (obviously, the file output may come before the print output).

When image processing is carried out on image data before outputting a print or a file, it is preferable that different image processing is carried out depending on the picture quality required by the picture image to be output in each form.

In this apparatus, when different image processing is carried out before outputting a print or a file, two forms of image processing means may be installed so that each means respectively carries out the processing for outputting a print or a file. Alternatively, one form of image processing means which can adjust processing conditions by changing a parameter or the like may be installed so that the image processing is carried out by changing the parameter for a print output or for a file output upon necessity.

The picture image outputting method and apparatus of the present invention are aimed at the case where a large amount of films should be processed promptly by using the automatic film feeding function, such as the case for the photograph finishing system installed in a laboratory. In other words, a system wherein picture image data are sequentially output in the order of reading while the reading of subsequent data is continuing is assumed herein, different from the configuration wherein a scanner and a printer are connected to a personal computer, for example, and image data in a frame are output as a file and then as a print after a film is manually set in a scanner and then read while its frames are being selected. In other words, as a system configuration, a configuration wherein image data having been read are written in two frame memories alternately while image data are read and output from the frame memory wherein writing is not carried out is assumed herein, such as the configuration of a conventional automatic printer for a laboratory.

When the above apparatus is used as a photograph finishing system, it is preferable that the system comprises a predetermined number of film scanners for reading a film brought in by a customer for placing an order, recording means for recording the picture image data read by the film scanner, a predetermined number of file outputting apparatuses for recording the picture image data having been temporarily recorded in the recording means in a predetermined recording medium as an image file for each order, and a predetermined number of printers for outputting the picture image data having been recorded in the recording means as a print, wherein the number of file outputting apparatuses and printers are such numbers that the apparatuses and printers can deal with, in a unit time, almost the same number of orders as all film scanners can deal with in the same unit time when they are constantly used.

The reason why the numbers of file outputting apparatuses and the printers are "such numbers that the apparatuses and printers can deal with, in a unit time, almost the same number of orders as all film scanners can deal with in the same unit time when they are constantly used" is that the processing speed is balanced as a whole by increasing the number of apparatus whose processing speed is low.

However, "the unit time" herein referred to means a comparatively long time, such as an hour or a day. Therefore, when the processing by the above system is viewed over a short time (for example, a few minutes), a temporary processing queue may occur between inputting and outputting apparatuses. For example, a file outputting apparatus such as a floppy disc drive generally has slower processing speed than a film scanner. Therefore, if picture image data read by one film scanner are output by one file outputting apparatus, a processing queue occurs. At this time, since one recording medium should be assigned to one order upon outputting a file, it is impossible to distribute the processing to the plurality of file outputting apparatuses. Therefore, when the processing for only one order is viewed, a processing queue occurs between the inputting or outputting apparatuses.

The above "recording means" is used for avoiding such a waste due to a processing queue. In other words, picture image data read by the film scanner are temporarily stored in the recording means regardless of the processing state of the file outputting apparatuses, and subsequent reading is carried out. In this manner, the file outputting apparatuses can read the picture image data having been stored in the recording means sequentially and carry out the outputting processing without making the film scanners wait for the completion of the output processing. Since the output processing of the film subsequently processed by the scanner is carried out by another file outputting apparatus, the processing by the entire system will never be delayed.

Therefore, the above recording means will be sufficient if the means has such a capacity and processing speed that the above object can be achieved. For example, a memory (a buffer) in a predetermined size may be set for each outputting apparatus and used in a cyclic manner. Alternatively, apart from the output to the printer or a removable medium, if the picture image data having been read are stored in a large capacity disc, the disc may be used as the recording means. Switching of the inputting and outputting apparatuses can be carried out by a generally known input output switching method.

As an embodiment of the above photograph finishing system, an embodiment is also possible which comprises film image obtaining means for obtaining a digital image by reading a developed film, print outputting means for outputting the digital image obtained by the film image obtaining means in the form of a print, and outputting means to a medium for recording the digital image in a predetermined recording medium, and further comprises medium image obtaining means for obtaining digital image recorded in a predetermined recording medium, and interrupting means for interruptively inputting the digital image obtained by the medium image obtaining means into the print outputting means, wherein the print outputting means outputs a picture print of the digital image which has been input interruptively when the inturruptive input is carried out by the interrupting means.

The interrupting means may be a known input switching function, and it can be either physical switching using hardware or logical switching using software. The interruption by the interrupting means can be carried out by an operator's instruction or by automatically generating an interruption signal after detecting a medium set in the medium image obtaining means.

The medium image obtaining means are mainly a medium disc drive such as an MO disc drive or a Zip disc drive. In addition to such a medium disc drive, the means includes communication equipment (a modem or a TA, and communication software or the like) for obtaining digital image data transferred from a hard disc of a customer's personal computer via a network. In other words, the recording medium include not only a removable medium but also a hard disc or the like installed in a personal computer.

It is preferable to carry out appropriate image processing upon necessity on the digital image data obtained by the film image obtaining means or the medium image obtaining means. More specifically, when such a digital image is printed out, it is preferable to carry out image processing in accordance with the characteristics of the printer, while it is preferable to carry out image processing preferable for a display on a CRT when the digital image is recorded in a medium.

In other words, the meaning of "outputting the digital image obtained by the film image obtaining means in the form of a print" or "interruptively inputting the digital image obtained by the medium image obtaining means into the print outputting means" is not necessarily limited to outputting or interruptively inputting the obtained image data as they are. It means that data representing the same image as the obtained digital image are output or interruptively input.

The data representing the same image as the obtained digital image are the data after necessary image processing has been carried out on the obtained digital image. The image processed data of the same digital image may be separately stored and substituted with the data before the processing.

In Japanese Unexamined Patent Publn. No. 8(1996)-306273 for example, a system in which a customer orders a print referring to a picture image at low resolution (the resolution which cannot be used for a print but is sufficient for display on a CRT) and the actual printing is carried out using separately stored high resolution image data of the picture image, has been disclosed. The photograph finishing system of the present invention may further comprise a recording medium for storing high resolution data of the digital image so that the medium image obtaining means obtains low resolution digital image or information indicating the low resolution image recorded in the predetermined medium and searches the recording medium for high resolution data corresponding to the low resolution digital image to interruptively input the obtained high resolution data to the print outputting means.

### DESCRIPTION OF THE PREFERRED EMBODIMENTS

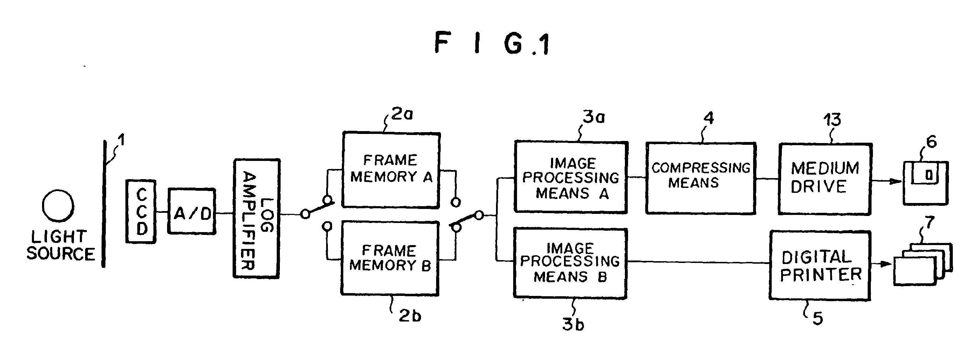

Hereinafter, each of the above forms will be explained referring to the accompanying drawings. Figure 1 shows a first embodiment of the present invention. This is a photograph finishing system installed in a laboratory or the like, and having the function of outputting picture image data which have been output as a first print, to a removable medium or to an image server in a laboratory.

The system reads all normal quality pictures recorded on film 1 except for the pictures with blur or extreme overexposure or underexposure, as does a conventional photograph finishing system. The digital image data obtained as described above are stored in a frame memory 2. Alternatively, if the system reads pictures recorded on an APS film, only frames having information showing necessity of printing may be read based on the information magnetically recorded on the film as described above.

The reading is carried out by scanning each frame twice, with the first being a pre-scan and the second being a fine scan. The pre-scan is carried out to find an optimal reading condition, while image data obtained by the fine scan is used for the output of the image data.

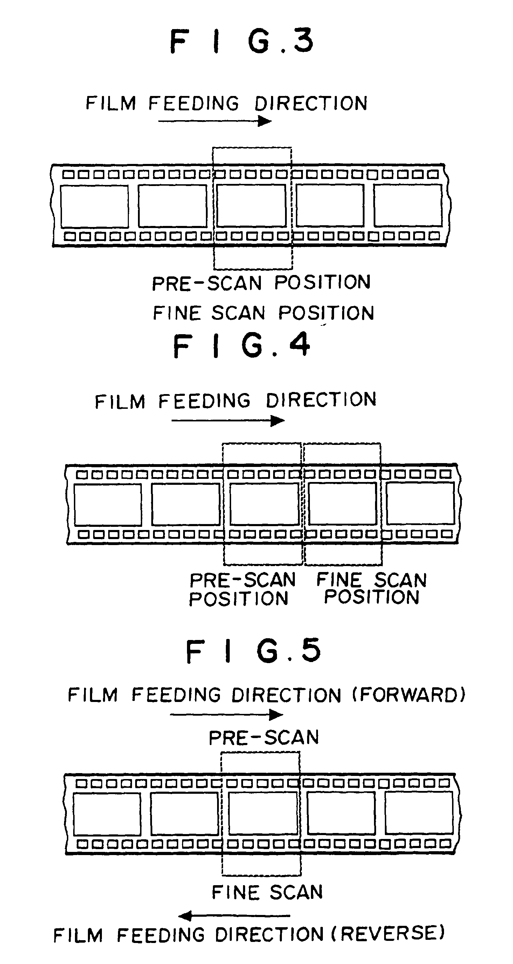

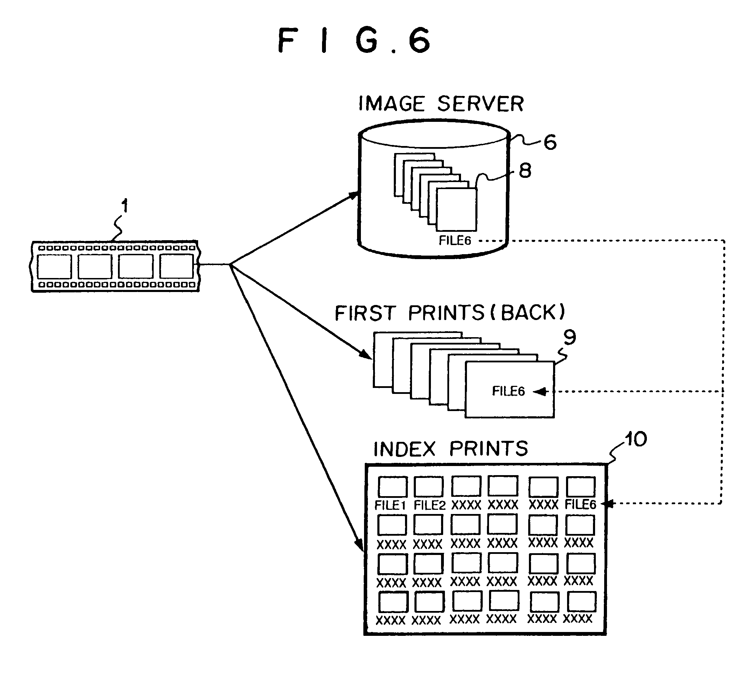

On this occasion, as shown in Figure 3, the film may be fed by one frame after the pre-scan and the fine scan is carried out on each frame. However, as shown in Figure 4, if the pre-scan and the fine scan are carried out in parallel at different positions, the reading can be carried out for only approximately half the time necessary for the method shown in Figure 3. Alternatively, as shown in Figure 5, only the pre-scan may be carried out for all frames by feeding the film in one direction, and the fine scan is then carried out by feeding the film in the reverse direction.

The image data read as described above are stored in two frame memories 2a and 2b alternately so that the reading processing and the output processing are carried out in parallel in such a manner that image data having been read are written in one frame memory, while image data having been stored in the other frame memory are output.

The image data taken out from the frame memory 2 for an output of the image data are processed by two image processing means 3a and 3b respectively. On this occasion, the processing carried out by the two image processing means and the subsequent output processing is carried out for each image data simultaneously (in parallel). After both processing operations have been completed, the frame memories are switched and the subsequent image reading is carried out by the two image processing means.

The image processing carried out by both image processing means 3a and 3b is the correction of color or tone, for example. However, the processing by these two image processing means is different depending on the object of the image data to be output. For example, the image processing means 3b carries out the processing for enhancing the quality of the image data for the output of the image data on photographic paper, while the image processing means 3a carries out the image processing for making the image data easy to see on a display of a personal computer. However, even though they carry out different processing, it is possible to correlate the processing carried out by the image processing means 3a with the processing carried out by the image processing means 3b, which is different from the case where the image processing is carried out respectively by two separate apparatuses. Therefore, when the file of the image is output later as a print, the image processing to be carried out is determined explicitly, based on the correlation.

The image data processed by the image processing means 3a are compressed by compressing means 4 and recorded as a compressed image file in a recording medium 6 by a medium drive 13. Meanwhile, the image data processed by the image processing means 3b are output as a print by a digital printer 5.

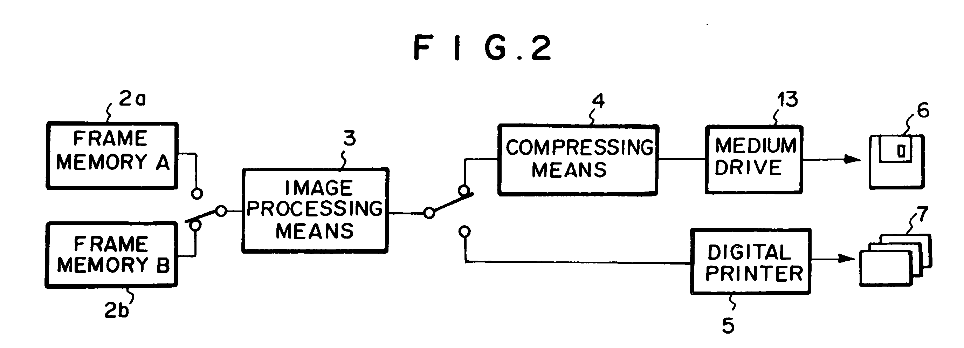

The embodiment described above carries out the print output and the file output for each image data together. Another embodiment which carries out the file output and the print output alternately will be described referring to Figure 2. The aspect of the reading of a film in the embodiment shown in Figure 2 is the same as the embodiment shown in Figure 1. Therefore, the explanation and the illustration of the reading are omitted.

The embodiment shown in Figure 1 comprises image processing means 3 respectively for file output and for print output. The embodiment shown in Figure 2 has only one image processing means, and the image processing means carries out the image processing for outputting a file when a processing path is switched to the compressing means 4, while the image processing means carries out the processing for outputting a print when the processing path is switched to the digital printer 5.

In the embodiment shown in Figure 2, file output and print output may be carried out alternately for each image data. Alternatively, after all frames of image data read by feeding a film in one direction have been output as files, the processing path may be switched and the image data are output as prints by reading each frame again while feeding the film in the reverse direction.

When the present invention is carried out, whether the embodiment 1 or 2 is adopted may be decided based on the performance of the film scanner and the digital printer. For example, if the reading by the scanner is time consuming, it is highly likely that a queue will occur in the outputting processing. Therefore, it will be sufficient to output a file and a print alternately by switching the processing path, without having two image processing means. In other words, it is preferable to adopt the embodiment wherein the activity ratio of each equipment becomes the largest.

When a file and a print are output by the picture image outputting method and apparatus of present invention, it is preferable that the name of an image file is recorded on the back of a first print 9 or under each frame of index prints 10, as shown in Figure 6. In this manner, when an extra print is ordered, for example, it becomes easier to search for an image file 8 stored in an image server 6 in a laboratory, and a prompt service can therefore be provided.

If the apparatus described above is installed in a laboratory or the like instead of a conventional photograph finishing system, not only the print output but also the file output can be carried out at almost the same cost as conventional printing, and a more inexpensive service can be provided to a customer.

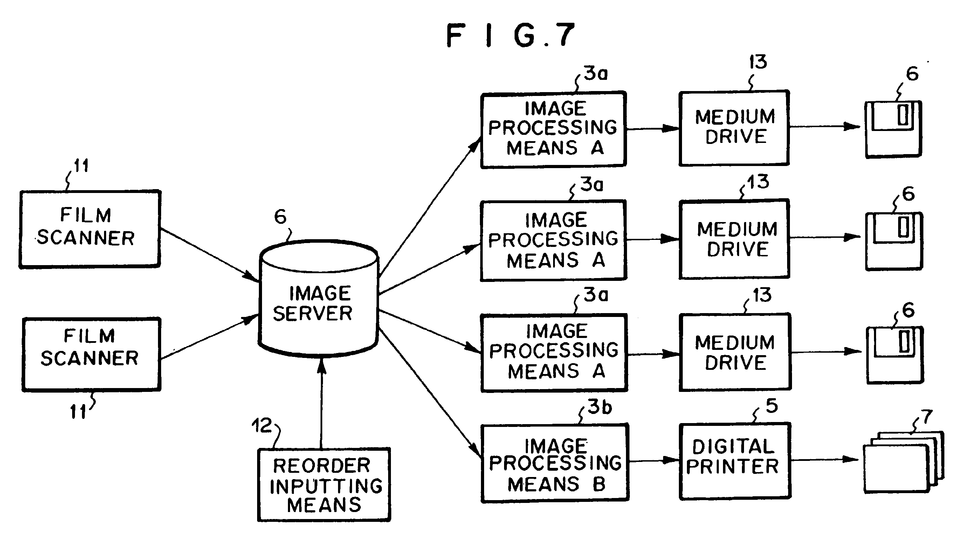

Still another embodiment wherein the above system is changed into a more efficient system will be explained hereinafter. Figure 7 shows a second embodiment of the present invention. The performance ratio of each apparatus used in this embodiment is 3 : 2: 6 for a film scanner, a medium drive, and a digital printer respectively in this order. Therefore, in the system shown in Figure 7, by making the ratio of the number of each apparatus 2 : 3 : 1 for the film scanner, the medium drive, and the digital printer respectively in this order, the processing times for reading, file outputting, and printing become almost the same.

Two film scanners 11 operate at the same time, and therefore, this system deals with two films at once. The picture image data read by each film scanner 11 are sequentially stored in the image server 6 which is a server computer with a large capacity disc.

In this case, the image server 6 stores the picture image data transferred from the two scanners 11 in separate memory areas, because it is preferable to store the picture image data read from the same film in the same recording medium 6 when they are output as files so that it can be distinguished on which film each picture image data were stored when they are output.

Meanwhile, in parallel to such processing by the film scanners, the output processing by a file outputting system and a print outputting system is carried out. The file outputting system comprises the image processing means 3 and the medium drive 13, while the print outputting system comprises the image processing means 3 and the digital printer 5. The image processing means 3 carries out, for example, the color or tone correction, or compression processing when a file is output. The medium drive 13 means a floppy disc drive when the recording medium 6 is a floppy disc, and an MO disc drive when the recording medium 6 is an MO disc, for example.

The image server 6 assigns one of the output processing systems to a unit of each recording area described above, that is, to each film. As for file output, the above three processing systems process it in parallel, while print output is carried out sequentially or alternately by each recording area by the output processing systems. In this case, it is preferable to print the film number or the like on the back of a print for example, so that it is distinguishable to which film the output print belongs. Likewise, it is preferable to add an identification mark corresponding to a film to the recording medium 6.

When the processing of two films is ordered at once, it is preferable to carry out the processing such as file output at each order, not by each film.

In the present embodiment, the image server 6 stores all picture image data so that they can be used later. However, it may not be the image server 6 which stores the picture image data, and another device which can play the role of a buffer to fill the processing time gap between the film scanner 11 and the output processing system may be used. In other words, it is not necessary to store all picture image data, and a memory which temporarily stores them will be sufficient.

However, some photograph finishing systems store the data in an image server. In such a case, the image server is used as the recording means and it is preferable that all picture image data recorded by customers are stored in the image server 6 as described in the above embodiment and the output processing is carried out later by an extra print order or the like from reorder inputting means 12.

## Claims

1. A picture image outputting method wherein a plurality of image data are obtained by sequentially reading images in a plurality of frames of a developed photograph film (1) using a scanner having automatic film feeding function, wherein a pre-scan is carried out and, in addition, a first reading is carried out in forward film feeding direction and a second reading is carried out in reverse film feeding direction, including the steps of outputting the plurality of image data as prints (7) by a printer (5) and recording the plurality of image data in a predetermined recording medium (6) as files, **characterized in that** image data read by the film scanner in one of the first and the second reading are output as prints (7) and image data read by the film scanner in the other of the first and second reading are output as files (6).

2. A picture image outputting method as defined in claim 1, wherein the reading is carried out on only the frames of desired images among the plurality of picture frames recorded on the photograph film (1).

3. A picture image outputting apparatus comprising:
a film scanner for obtaining a plurality of image data recorded on a developed photograph film (1) by pre-scanning the film, and in addition sequentially reading a plurality of frames of the photograph film fed automatically, wherein the film scanner is adapted to carry out are first reading in forward film feeding direction and a second reading in reverse film feeding direction;
a printer (5) for printing the plurality of image data as prints (7); and
file outputting means (13) which can carry out file output of the image data in a predetermined recording medium (6) while the plurality of image data are being printed by the printer, by operating in parallel with the printer (5), **characterized in that** said printer (5) and said file outputting means are adapted such that the image data read by the film scanner in one of the first and second reading are output as prints (7) by the printer (5) and the image data read by the film scanner in the other of the first and second reading are output as files (6) by the file outputting means (13).

4. A picture image outputting apparatus as defined in claim 3, wherein the film scanner carries out the reading on only frames of desired images among the plurality of frames recorded on the photograph film.

## Patentansprüche

1. Bildausgabeverfahren, bei dem eine Mehrzahl von Bilddaten dadurch erhalten wird, daß Bilder in einer Mehrzahl von Einzelbildstellen eines entwickelten photographischen Films (1) mit Hilfe eines Scanners mit automatischer Filmtransportfunktion gelesen werden, wobei eine Vorabtastung ausgeführt wird und zusätzlich ein erster Lesevorgang in Vorwärts-Filmtransportrichtung und ein zweiter Lesevorgang in Rückwärts-Filmtransportrichtung durchgeführt werden, umfassend die Schritte des Ausgebens der mehreren Bilddaten in Form von Abzügen (7) mittels eines Vergrößerungsgeräts (5) und Aufzeichnen der mehreren Bilddaten in einem vorbestimmten Aufzeichnungsmedium (6) als Dateien, **dadurch gekennzeichnet, daß** von dem Film-Scanner beim ersten oder beim zweiten Lesen gelesene Bilddaten als Abzüge (7) ausgegeben werden, und daß von dem Film-Scanner beim zweiten bzw. beim ersten Lesen gelesene Bilddaten als Dateien (6) ausgegeben werden.

2. Verfahren nach Anspruch 1, bei dem das Lesen nur für solche Einzelbilder unter den mehreren auf dem photographischen Film (1) aufgezeichneten Einzelbildern stattfindet, die gewünschte Bilder enthalten.

3. Bildausgabevorrichtung, umfassend:
einen Film-Scanner zum Erhalten einer Mehrzahl von Bilddaten, die auf einem entwickelten photographischen Film (1) aufgezeichnet sind, indem der Film einer Vorabtastung unterzogen wird und zusätzlich eine Mehrzahl von Einzelbildern des automatisch transportierten photographischen Films sequentiell gelesen werden, wobei der Film-Scanner dazu ausgebildet ist, einen ersten Lesevorgang bei Vorwärts-Filmtransportrichtung und einen zweiten Lesevorgang bei Rückwärts-Filmtransportrichtung durchzuführen;
ein Vergrößerungsgerät (5) zum Herstellen von Abzügen (7) von den mehreren Bilddaten; und
eine Dateiausgabeeinrichtung (13), die eine Dateiausgabe der Bilddaten auf einem vorbestimmten Aufzeichnungsmedium (6) ausführen kann, während die mehreren Bilddaten von dem Vergrößerungsgerät als Abzüge hergestellt werden, indem parallel zu dem Vergrößerungsgerät gearbeitet wird, **dadurch gekennzeichnet, daß** das Vergrößerungsgerät (5) und die Dateiausgabeeinrichtung derart ausgebildet sind, daß von dem Film-Scanner bei dem ersten oder dem zweiten Lesevorgang gelesene Bilddaten als Abzüge (7) von dem Vergrößerungsgerät (5) ausgegeben werden, während von dem Film-Scanner bei dem zweiten bzw. dem ersten Lesevorgang gelesene Bilddaten von der Dateiausgabeeinrichtung (13) als Dateien (6) ausgegeben werden.

4. Vorrichtung nach Anspruch 3, bei der der Film-Scanner das Lesen nur von solchen Einzelbildern durchführt, die unter den mehreren auf dem photographischen Film aufgezeichneten Einzelbildern die gewünschten Bilder enthalten.

## Revendications

1. Procédé de sortie d'image dans lequel une pluralité de données d'image est obtenue en lisant séquentiellement des images dans une pluralité de photogrammes d'un film photographique développé (1) en utilisant une unité d'analyse de film dotée d'une fonction d'avance de film automatique, dans lequel un balayage préalable est exécuté et, de plus, une première lecture est réalisée dans une direction d'avance du film vers l'avant et une deuxième lecture est réalisé dans une direction d'avance du film vers l'arrière, le procédé comprenant les étapes consistant à délivrer en sortie la pluralité de données d'image sous la forme de tirages (7) à l'aide d'une imprimante (5), et à enregistrer la pluralité de données d'image sur un support d'enregistrement (6) prédéterminé sous la forme de fichiers, **caractérisé en ce que** les données d'image lues par l'unité d'analyse de film au cours de l'une de la première et de la deuxième lectures sont délivrées en sortie sous la forme de tirages (7) et que les données d'image lues par l'unité d'analyse de film au cours de l'autre de la première et de la deuxième lectures sont délivrées en sortie sous la forme de fichiers (6).

2. Procédé de sortie d'image selon la revendication 1, dans lequel la lecture est réalisée uniquement sur des photogrammes d'images sélectionnées parmi la pluralité de photogrammes enregistrée sur le film photographique (1).

3. Appareil de sortie d'image comprenant :
une unité d'analyse de film qui permet d'obtenir une pluralité de données d'image enregistrée sur un film photographique développé (1) en réalisant un balayage préalable du film et, de plus, en lisant séquentiellement une pluralité de photogrammes du film photographique à avance automatique, dans lequel l'unité d'analyse de film est adaptée pour réaliser une première lecture dans une direction d'avance du film vers l'avant et une deuxième lecture dans une direction d'avance du film vers l'arrière ;
une imprimante (5) pour imprimer la pluralité de données d'image sous la forme de tirages (7) ; et
des moyens de sortie de fichiers (13) qui peuvent accomplir une sortie des données d'image sous forme de fichiers sur un support d'enregistrement (6) prédéterminé tandis que la pluralité de données d'image est imprimée par l'imprimante, par un fonctionnement en parallèle avec l'imprimante (5), **caractérisé en ce que** ladite imprimante (5) et lesdits moyens de sortie des fichiers sont adaptés pour que les données d'image lues par l'unité d'analyse de film au cours de l'une de la première et de la deuxième lectures soient délivrées en sortie sous la forme de tirages (7) par l'imprimante (5), et que les données d'image lues par une unité d'analyse de film dans l'autre de la première et de la deuxième lecture soient délivrées en sortie sous la forme de fichiers (6) par les moyens de sortie de fichiers (13).

4. Appareil de sortie d'image selon la revendication 3 dans lequel l'unité d'analyse de film réalise la lecture uniquement sur des photogrammes d'images sélectionnées parmi la pluralité de photogrammes enregistrée sur le film photographique.
